# FASCICULE DE BREVET EUROPEEN

(11) **EP 2 676 317 B1**
(45) Date de publication et mention de la délivrance du brevet: **08.04.2015**
(21) Numéro de dépôt: 12704392.5
(22) Date de dépôt: 07.02.2012
(51) Int. Cl.: H01M 8/02

(54) **PILE A COMBUSTIBLE A MEMBRANE D'ECHANGE DE PROTONS PRESENTANT DES PERFORMANCES ACCRUES**
PROTONENAUSTAUSCHMEMBRAN-BRENNSTOFFZELLE MIT VERBESSERTER LEISTUNG
PROTON-EXCHANGE MEMBRANE FUEL CELL HAVING ENHANCED PERFORMANCE

(30) Priorité: 14.02.2011 FR 1151184
(43) Date de publication de la demande: 25.12.2013
(73) Titulaire: Commissariat à l'Énergie Atomique et aux Énergies Alternatives, 75015 Paris (FR)
(72) Inventeur: VINCENT, Rémi, F-38100 Grenoble (FR); TARD, Julien, F-38070 Saint Quentin Fallavier (FR)
(74) Mandataire: Guérin, Jean-Philippe
(86) Numéro de dépôt international: PCT/EP2012/052070
(87) Numéro de publication internationale: WO 2012/110367

(56) Documents cités:
- EP-A2- 2 234 192
- WO-A1-2005/101554
- WO-A2-2004/062020
- US-A1- 2006 021 544
- US-A1- 2008 113 253
- US-A1- 2008 248 368

## Description

L'invention concerne les piles à combustible, et en particulier les piles à combustible à membrane d'échange de protons.

Les piles à combustible sont notamment envisagées comme source d'énergie pour des véhicules automobiles produits à grande échelle dans le futur. Une pile à combustible est un dispositif électrochimique qui convertit de l'énergie chimique directement en énergie électrique. Une pile à combustible comprend un empilement en série de plusieurs cellules. Chaque cellule génère une tension de l'ordre de 1Volt, et leur empilement permet de générer une tension d'alimentation d'un niveau plus élevé, par exemple de l'ordre d'une centaine de volts.

Parmi les types de piles à combustible connus, on peut notamment citer la pile à combustible à membrane d'échange de protons, dite PEM. De telles piles à combustible présentent des propriétés de compacité particulièrement intéressantes. Chaque cellule comprend une membrane électrolytique permettant seulement le passage de protons et non le passage des électrons. La membrane comprend une anode sur une première face et une cathode sur une deuxième face.

Au niveau de l'anode, du dihydrogène utilisé comme carburant est ionisé pour produire des protons traversant la membrane. Les électrons produits par cette réaction migrent vers une plaque d'écoulement, puis traversent un circuit électrique externe à la cellule pour former un courant électrique. Au niveau de la cathode, de l'oxygène est réduit et réagit avec les protons pour former de l'eau.

La pile à combustible peut comprendre plusieurs plaques d'écoulement, par exemple en métal, empilées les unes sur les autres. L'AME (assemblage membrane-électrodes) est disposée entre deux plaques d'écoulement. Les plaques d'écoulement peuvent comprendre des canaux et orifices pour guider les réactifs et les produits vers/depuis la membrane. Les plaques sont également électriquement conductrices pour former des collecteurs des électrons générés au niveau de l'anode. Des couches de diffusion gazeuse (pour Gaz Diffusion Layer en langue anglaise) sont interposées entre les électrodes et les plaques d'écoulement et sont en contact avec les plaques d'écoulement.

Les plaques d'écoulement sont en contact avec des solutions très acides. Du côté de la cathode, la plaque est soumise à de l'air sous pression dans un environnement hautement oxydant. Du côté de l'anode, la plaque est en contact avec de l'hydrogène. Dans de telles conditions, les plaques métalliques subissent des phénomènes de corrosion. La corrosion d'une plaque entraîne d'une part l'émission d'ions métalliques venant altérer le fonctionnement de la membrane électrolytique. La corrosion de la plaque entraîne d'autre part la formation d'une couche d'oxyde isolante sur le métal, ce qui augmente sa résistance de contact avec la couche de diffusion gazeuse. La résistance électrique entre la plaque et la couche de diffusion gazeuse est alors accrue. Ces phénomènes induisent une réduction des performances de la pile à combustible.

Les plaques métalliques doivent donc présenter une conductivité électrique élevée tout en évitant des phénomènes d'oxydation et de corrosion. Comme la plupart des métaux sont sujets à ces mêmes problèmes d'oxydation et de corrosion, un certain nombre de développements ont proposé de former un revêtement protecteur sur des plaques métalliques pour conserver les propriétés de conduction électrique du métal qui les constitue tout en évitant des réactions d'oxydation à leur surface.

Dans le document intitulé « Deposition of gold-titanium and gold-nickel coatings on electropolished 316L stainless steel bipolar plates for proton exchange membrane fuel cells » dans la publication International journal of hydrogen energy, 2010, vol. 35, no4, pp. 1713-1718, les plaques métalliques sont notamment revêtues d'or. Ainsi, la résistance de contact entre une plaque et une couche de diffusion gazeuse est réduite. Cependant, le coût de l'or et de son processus de dépôt rendent une telle solution irréaliste à une échelle industrielle.

Le document US2008/248368 décrit une pile à combustible munie d'une plaque collectrice séparatrice recouverte d'une couche hydrophile incluant une matrice en polyuréthane. Une couche de diffusion gazeuse est recouverte d'une couche hydrophobique en polytétrafluoroéthylène.

Le document US7267869 propose de former une couche de protection sur des plaques métalliques par dépôt d'une encre à base de polymère chargé en particules de carbone. Les particules de carbone ont pour vocation d'améliorer la conduction entre la couche de diffusion gazeuse et la plaque métallique.

Le document EP2234192 décrit une pile à combustible comprenant une matrice polyuréthane dans laquelle sont incluses des charges de matériau conducteur, déposée sur la plaque métallique constituant le collecteur de courant.

Cependant, il est souhaitable d'améliorer encore la conduction entre la couche de diffusion gazeuse et la plaque métallique, tout en utilisant des matériaux et procédés exploitables à une échelle industrielle.

L'invention porte ainsi sur une pile à combustible, comprenant :
- une membrane échangeuse de protons ;
- une première électrode et une deuxième électrode fixées de part et d'autre de la membrane échangeuse de protons ;
- une plaque métallique collectrice de courant ;
- une couche de diffusion gazeuse interposée entre la plaque collectrice de courant et la deuxième électrode ;
- une première couche fixée sur la plaque collectrice de courant, la première couche comprenant une matrice en polyuréthane dans laquelle sont incluses des charges de matériau conducteur;
- une deuxième couche fixée sur la couche de diffusion gazeuse, la deuxième couche comprenant une matrice polyuréthane dans laquelle sont incluses des charges de matériau conducteur, la deuxième couche étant en contact avec la première couche.

Selon une variante, la pile comprend en outre :
- une autre plaque métallique collectrice de courant ;
- une autre couche de diffusion gazeuse interposée entre l'autre plaque collectrice de courant et la première électrode ;
- une troisième couche fixée sur l'autre plaque collectrice de courant, la troisième couche comprenant une matrice en polyuréthane dans laquelle sont incluses des charges de matériau conducteur;
- une quatrième couche fixée sur l'autre couche de diffusion gazeuse, la quatrième couche comprenant une matrice polyuréthane dans laquelle sont incluses des charges de matériau conducteur, la quatrième couche étant en contact avec la troisième couche.

Selon encore une variante, la matrice polyuréthane des première et deuxième couches est obtenue par utilisation d'un durcisseur de type diisocyanate.

Selon une autre variante, ledit durcisseur est choisi dans le groupe comprenant l'hexylènediisocyanate, le toluylènediisocyanate et le dihpénylméthanediisocyanate.

Selon encore une autre variante, les charges conductrices incluses dans les première et deuxième couches comprennent des particules de carbone.

Selon une variante, les particules de carbone sont du noir de carbone présentant une granulométrie comprise entre 200 et 500 nm selon un calibrage par filtre seringue.

Selon encore une variante, les surfaces des première et deuxième couches en contact présentent une rugosité inférieure à 1 micromètre.

Selon une autre variante, la couche de diffusion gazeuse est formée de fibres de graphite.

Selon encore une autre variante, la première couche comporte une alternance de rainures et de parties saillantes et la deuxième couche comporte des évidements traversants en vis-à-vis des rainures.

L'invention porte également sur un procédé de fabrication d'une pile à combustible comportant une membrane échangeuse de protons, une première électrode et une deuxième électrode fixées de part et d'autre de la membrane échangeuse de protons, une plaque métallique collectrice de courant et une couche de diffusion gazeuse interposée entre la plaque collectrice de courant et la deuxième électrode, le procédé comprenant les étapes de :
- formation d'une première couche avec une matrice polyuréthane incluant des charges de matériau conducteur sur la plaque collectrice de courant ;
- formation d'une deuxième couche avec une matrice polyuréthane incluant des charges de matériau conducteur sur la couche de diffusion gazeuse ;
- mise en contact des première et deuxième couches formées.

Selon une variante, les étapes de formation des première et deuxième couches incluent la réticulation d'une matrice polyuréthane par l'intermédiaire d'un durcisseur de type diisocyanate.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en perspective éclatée schématique d'une cellule de pile à combustible selon un mode de réalisation de l'invention ;
- la figure 2 est une vue en coupe de la cellule de la figure 1 ;
- la figure 3 est une vue agrandie de détails de la figure 2 ;
- la figure 4 est un diagramme comparatif de la résistivité de contact entre une couche de conduction gazeuse et une plaque de guidage.

L'invention propose une pile à combustible à membrane échangeuse de protons (120). Des électrodes sont fixées de part et d'autre de la membrane. La pile comporte également une plaque métallique collectrice de courant et une couche de diffusion gazeuse interposée entre la plaque collectrice de courant et une des électrodes. Une première couche est fixée sur la plaque collectrice de courant et comprend une matrice en polyuréthane dans laquelle sont incluses des charges de matériau conducteur. Une deuxième couche est fixée sur la couche de diffusion gazeuse et comprend une matrice polyuréthane dans laquelle sont incluses des charges de matériau conducteur. Les première et deuxième couches sont en contact.

L'invention permet d'obtenir à la fois une bonne conduction électrique à travers les couches fixées respectivement sur la plaque de guidage et sur la couche de diffusion gazeuse, d'assurer une résistance de contact réduite entre la plaque de guidage et la couche de diffusion gazeuse, d'assurer la protection de la plaque de guidage contre la corrosion et de faire appel à des matériaux dont le coût est compatible avec une production à échelle industrielle.

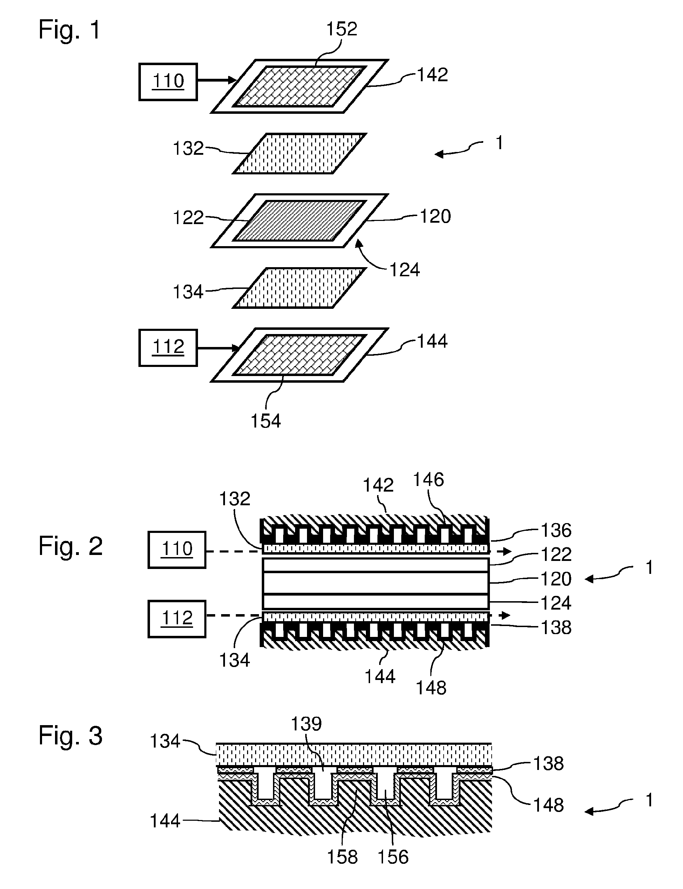

La figure 1 est une vue en perspective éclatée schématique d'une cellule 1 d'une pile à combustible selon un mode de réalisation de l'invention. La cellule 1 est du type à membrane échangeuse de protons ou membrane à électrolyte polymère. La cellule 1 de la pile à combustible comprend une source de carburant 110 alimentant en dihydrogène une entrée de la cellule. La cellule 1 comprend également une source d'air 112 alimentant une entrée de la cellule en air, contenant de l'oxygène utilisé comme oxydant. La cellule 1 comprend également des canaux d'échappement non illustrés. La cellule 1 peut également présenter un circuit de refroidissement non illustré.

La cellule 1 comprend une couche d'électrolyte 120 formée par exemple d'une membrane polymère. La cellule 1 comprend également une anode 122 et une cathode 124 placées de part et d'autre de l'électrolyte 120 et fixées sur l'électrolyte 120. La cellule 1 présente des plaques de guidage d'écoulement 142 et 144 disposées en vis-à-vis respectivement de l'anode 122 et de la cathode 144. La cellule 1 présente de plus une couche de diffusion de gaz 132 disposée entre l'anode 122 et la plaque de guidage 142. La cellule 1 présente par ailleurs une couche de diffusion de gaz 134 disposée entre la cathode 124 et la plaque de guidage 144.

La figure 2 est une vue en coupe schématique de la cellule 1 de la pile à combustible selon le mode de réalisation de l'invention.

La couche d'électrolyte 120 forme une membrane semi-perméable permettant une conduction protonique tout en étant imperméable aux gaz présents dans la cellule. La couche d'électrolyte 120 empêche également un passage des électrons entre l'anode 122 et la cathode 124.

L'anode 122 comprend généralement une couche de catalyseur incluant par exemple un catalyseur comme le platine supporté par du carbone et un ionomère conducteur de protons comme par exemple le produit distribué sous la référence commerciale Nafion. Le platine est utilisé pour ses propriétés de catalyseur.

La cathode 124 comprend généralement une couche de catalyseur incluant par exemple du platine fixé sur un support carboné et un ionomère conducteur de protons. Le platine est utilisé pour ses propriétés de catalyseur.

La couche de diffusion de gaz 132 sert à diffuser du dihydrogène depuis un canal d'écoulement de la plaque 142 vers l'anode 122.

La couche de diffusion de gaz 134 sert à diffuser de l'air depuis un canal d'écoulement de la plaque 144 vers la cathode 124.

Les couches de diffusion de gaz 132 et 134 peuvent par exemple être réalisées de façon connue en soi sous forme de fibre, de feutre ou de tissu de graphite sur lequel est fixé un agent hydrophobe tel que du polytétrafluoroéthylène.

Les plaques 142 et 144 sont réalisées en métal tel que de l'acier inoxydable de façon connue en soi. Les plaques 142 et 144 sont usuellement désignées par le terme de plaques bipolaires, un même composant comportant généralement une plaque de guidage 142 appartenant à une cellule et une plaque de guidage 144 appartenant à une cellule adjacente. Les plaques 142 et 144 sont conductrices et permettent de collecter le courant généré par la pile 1. Les plaques 142 et 144 comportent des faces orientées vers la couche d'électrolyte 120 comportant respectivement des zones 152 et 154 comportant un ensemble de rainures ou de canaux. Les zones 152 et 154 comportant les rainures ou canaux permettent d'acheminer respectivement le dihydrogène et l'air à l'intérieur de la cellule 1.

Durant le fonctionnement de la pile à combustible, de l'air s'écoule entre l'électrolyte 120 et la plaque 144, et du dihydrogène s'écoule entre l'électrolyte 120 et la plaque 142. Au niveau de l'anode 122, le dihydrogène est oxydé pour produire des protons qui traversent l'électrolyte 120. Les électrons produits par cette réaction sont collectés par la plaque 142 et appliqués sur une charge électrique connectée à la cellule 1 pour former un courant électrique. Au niveau de la cathode 124, de l'oxygène est réduit et réagit avec les protons pour former de l'eau. Les réactions au niveau de l'anode et de la cathode sont régies comme suit :

H₂ → 2H⁺ + 2e⁻ au niveau de l'anode ;

4H⁺ + 4e⁻ + O₂ → 2H₂O au niveau de la cathode.

Durant son fonctionnement, une cellule 1 génère usuellement une tension continue entre l'anode et la cathode de l'ordre de 1 V.

Comme illustré aux figures 2 et 3, une couche 148 est fixée sur la plaque 144. Une couche 138 est par ailleurs fixée sur la couche de diffusion gazeuse 134. La présence d'une couche 138 sur la couche de diffusion 134 va à l'encontre de l'idée reçue selon laquelle la cellule 1 présente un fonctionnement optimal en étant dépourvue de tout élément additionnel pouvant altérer sa perméabilité au passage de gaz. Par ailleurs, la présence d'une couche 138 présentant une faible porosité n'altère en pratique que peu la perméabilité au passage de gaz de la couche de diffusion 134, du fait de la présence d'évidements 139 détaillés ultérieurement. Les couches 138 et 148 sont en contact.

La couche 148 est destinée à protéger la plaque 144 contre la corrosion et destinée à réduire la résistance de contact avec la couche de diffusion gazeuse 134. La couche 148 est également destinée à présenter une résistance réduite face au courant électrique la traversant. La couche 148 comporte une matrice à base de polyuréthane ayant notamment pour fonction d'assurer sa résistance mécanique. Des charges de matériaux conducteurs sont incluses dans la matrice. Les charges de matériaux conducteurs rendent ainsi la couche 148 conductrice. On a constaté qu'une telle matrice permettait d'obtenir une très faible rugosité au niveau des zones de contact de la couche 148. Les inventeurs ont constaté que cette rugosité réduite permet de réduire la résistance de contact avec la couche de diffusion gazeuse 134, tout en assurant une protection satisfaisante de la plaque 144. Avantageusement, la rugosité des zones de contact de la couche 148 est inférieure à 1 µm.

La couche 138 est destinée à réduire la résistance de contact avec la plaque 144 et à favoriser la diffusion de gaz vers la cathode 124. La couche 138 est également destinée à présenter une résistance réduite face au courant électrique la traversant. La couche 138 comporte une matrice à base de polyuréthane ayant notamment pour fonction d'assurer sa résistance mécanique. Des charges de matériaux conducteurs sont incluses dans la matrice. Les charges de matériaux conducteurs rendent ainsi la couche 138 conductrice. On a constaté qu'une telle matrice permettait d'obtenir une très faible rugosité au niveau des zones de contact de la couche 138. La rugosité de la couche 138 est notamment très inférieure à la rugosité de la couche de diffusion 134. Les inventeurs ont constaté que cette rugosité réduite permet de réduire la résistance de contact avec la plaque 144. Avantageusement, la rugosité des zones de contact de la couche 138 est inférieure à 1 µm.

Une telle matrice polyuréthane permet de former des couches 138 et 148 particulièrement lisses et homogènes. La très faible rugosité et la similitude de rugosité des zones des couches 138 et 148 placées en contact permet d'obtenir une résistance de contact très réduite entre la couche de diffusion 134 et la plaque 144. Les couches 138 et 148 présentent avantageusement une épaisseur comprise entre 5 et 20µm. La proportion de la matrice en poids dans la couche 138 est avantageusement comprise entre 20 et 70%.

Avantageusement, les charges de matériaux conducteurs incluses dans les couches 138 et 148 sont du noir de carbone. Le noir de carbone présente avantageusement une granulométrie comprise entre 200 et 500 nm selon un calibrage par filtre seringue. La proportion des charges en poids dans la couche 138 est avantageusement comprise entre 20 et 60%. On place une proportion de noir de carbone suffisante pour bénéficier d'un phénomène de percolation dans la matrice.

La matrice polyuréthane est avantageusement réalisée avec un durcisseur de type diisocyanate. Ainsi, un durcisseur tel que du hexylènediisocyanate, du toluylènediisocyanate ou du dihpénylméthanediisocyanate peut être utilisé.

L'association d'une matrice en polyuréthane, d'un durcisseur diisocyanate et charges de noir de carbone a permis en pratique d'obtenir des couches 138 et 148 particulièrement lisses avec une répartition homogène des charges. Ainsi, la répulsion entre les charges n'est pas trop élevée ce qui permet d'éviter de former des couches 138 et 148 poreuses. L'attraction entre les charges n'est pas non plus trop élevée ce qui permet d'éviter la formation d'agglomérats de particules dans les couches 138 et 148.

La plaque 144 et la couche 148 présentent une alternance de parties saillantes 158 et de rainures 156. Les rainures 156 sont par exemple formées avec un pas compris entre 1 et 2 mm. La couche 138 comporte des évidements 139 traversants disposés en vis-à-vis des rainures 156. Les évidements 139 permettent ainsi un passage du gaz à travers la couche de diffusion 134. Le reste de la couche 138 est en contact avec les parties saillantes 158 de la couche 148.

Les couches 138 et 148 peuvent être formées respectivement sur la couche 134 et la plaque 144 par différents procédés connus en soi de l'homme du métier, tels que la sérigraphie ou la pulvérisation à partir d'une composition sous forme d'encre. Les couches 138 et 148 peuvent également être durcies avant d'être rapportées par transfert respectivement sur la couche 134 et la plaque 144.

Outre la matrice polymère, le durcisseur et les charges conductrices, l'encre utilisée peut également comprendre un produit tensioactif (anionique ou ionique) destiné à stabiliser les charges conductrices dans la matrice liquide. La couche 138 peut comprendre entre 7 et 20% en poids de produit tensioactif.

L'encre peut présenter un extrait sec compris entre 1 et 40%, en fonction du procédé de formation des couches 138 et 148 utilisé.

Un premier exemple de composition d'encre possible est le suivant :
- 3,9 parts en poids du produit distribué par la société Bayer sous la référence commerciale Bayhydrol UXP2239 ;
- 2,4 parts en poids du produit distribué par la société Bayer sous la référence commerciale Bayhudrur BL5335 ;
- 2,1 parts en poids du noir de carbone distribué par la société Bayer sous la référence commerciale Vulcan XC-72 ;
- 0,7 parts en poids du produit tensioactif distribué par la société Bayer sous la référence commerciale Triton X-100 ;
- 91 parts en poids d'eau distillée.

Un second exemple de composition d'encre possible est le suivant :
- 2,6 parts en poids du produit distribué par la société Bayer sous la référence commerciale Bayhydrol UXP2239 ;
- 1,6 parts en poids du produit distribué par la société Bayer sous la référence commerciale Bayhudrur BL5335 ;
- 2,7 parts en poids de poudre de graphite distribuée sous la référence commerciale Timrex KS6 ;
- 0,9 parts en poids du produit tensioactif distribué par la société Bayer sous la référence commerciale Triton X-100 ;
- 92,3 parts en poids d'eau distillée.

Les couches 136 et 146 peuvent présenter une structure et des propriétés similaires aux couches 138 et 148. La plaque 142 et la couche de diffusion 132 peuvent également présenter une structure et des propriétés similaires à la plaque 144 et à la couche de diffusion 134.

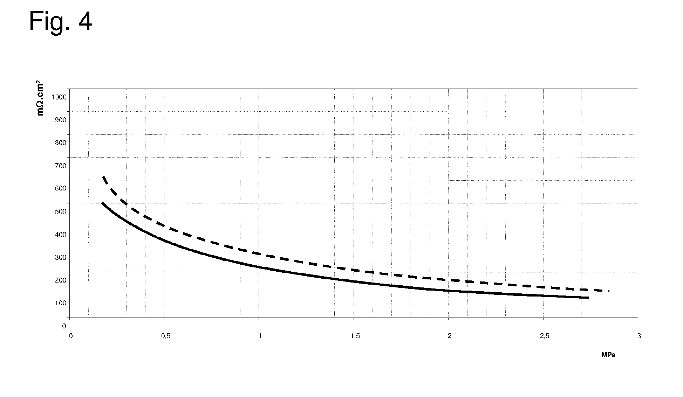

La figure 4 est un diagramme illustrant la résistivité de contact entre une plaque 144 et une couche de diffusion 134 en fonction de la pression de contact entre elles. La courbe en trait plein illustre la résistivité du mode de réalisation décrit précédemment. La courbe en trait discontinu illustre la résistivité avec une même plaque 144 mais une couche de diffusion 134 dépourvue de couche 138. On constate par exemple que pour une pression de 1 MPa, la résistivité de contact du mode de réalisation de l'invention est inférieure de 25 %.

## Revendications

1. Pile à combustible (1), comprenant :
- une membrane échangeuse de protons (120) ;
- une première électrode (122) et une deuxième électrode (124) fixées de part et d'autre de la membrane échangeuse de protons ;
- une plaque métallique collectrice de courant (144) ;
- une couche de diffusion gazeuse (134) interposée entre la plaque collectrice de courant et la deuxième électrode (124);
**caractérisée en ce qu'**elle comprend en outre :
- une première couche (148) fixée sur la plaque collectrice de courant (144), la première couche comprenant une matrice en polyuréthane dans laquelle sont incluses des charges de matériau conducteur;
- une deuxième couche (138) fixée sur la couche de diffusion gazeuse (134), la deuxième couche comprenant une matrice polyuréthane dans laquelle sont incluses des charges de matériau conducteur, la deuxième couche étant en contact avec la première couche.

2. Pile à combustible (1) selon la revendication 1, comprenant en outre :
- une autre plaque métallique collectrice de courant (142) ;
- une autre couche de diffusion gazeuse (132) interposée entre l'autre plaque collectrice de courant et la première électrode (122) ;
- une troisième couche (146) fixée sur l'autre plaque collectrice de courant (142), la troisième couche comprenant une matrice en polyuréthane dans laquelle sont incluses des charges de matériau conducteur;
- une quatrième couche (136) fixée sur l'autre couche de diffusion gazeuse (132), la quatrième couche comprenant une matrice polyuréthane dans laquelle sont incluses des charges de matériau conducteur, la quatrième couche étant en contact avec la troisième couche.

3. Pile à combustible (1) selon la revendication 1 ou 2, dans laquelle la matrice polyuréthane des première et deuxième couches est obtenue par utilisation d'un durcisseur de type diisocyanate.

4. Pile à combustible selon la revendication 3, dans laquelle ledit durcisseur est choisi dans le groupe comprenant l'hexylènediisocyanate, le toluylènediisocyanate et le dihpénylméthanediisocyanate.

5. Pile à combustible selon l'une quelconque des revendications précédentes, dans laquelle les charges conductrices incluses dans les première et deuxième couches comprennent des particules de carbone.

6. Pile à combustible selon la revendication 5, dans laquelle les particules de carbone sont du noir de carbone présentant une granulométrie comprise entre 200 et 500 nm selon un calibrage par filtre seringue.

7. Pile à combustible selon l'une quelconque des revendications précédentes, dans laquelle les surfaces des première et deuxième couches en contact présentent une rugosité inférieure à 1 micromètre.

8. Pile à combustible selon l'une quelconque des revendications précédentes, dans laquelle la couche de diffusion gazeuse (134) est formée de fibres de graphite.

9. Pile à combustible selon l'une quelconque des revendications précédentes, dans laquelle la première couche (148) comporte une alternance de rainures (156) et de parties saillantes (158) et dans laquelle la deuxième couche (138) comporte des évidements traversants (139) en vis-à-vis des rainures (156).

10. Procédé de fabrication d'une pile à combustible comportant une membrane échangeuse de protons (120), une première électrode (122) et une deuxième électrode (124) fixées de part et d'autre de la membrane échangeuse de protons, une plaque métallique collectrice de courant (144) et une couche de diffusion gazeuse (134) interposée entre la plaque collectrice de courant et la deuxième électrode (124), le procédé comprenant les étapes de :
- formation d'une première couche (148) avec une matrice polyuréthane incluant des charges de matériau conducteur sur la plaque collectrice de courant (144) ;
- formation d'une deuxième couche (138) avec une matrice polyuréthane incluant des charges de matériau conducteur sur la couche de diffusion gazeuse (134) ;
- mise en contact des première et deuxième couches formées.

11. Procédé de fabrication selon la revendication 10, dans lequel les étapes de formation des première et deuxième couches incluent la réticulation d'une matrice polyuréthane par l'intermédiaire d'un durcisseur de type diisocyanate.

## Patentansprüche

1. Brennstoffzelle (1), umfassend:
- eine Protonenaustauschmembran (120);
- eine erste Elektrode (122) und eine zweite Elektrode (124), die beiderseits der Protonenaustauschmembran befestigt sind;
- eine metallische Stromsammelplatte (144);
- eine Gasdiffusionsschicht (134), die zwischen der Stromsammelplatte und der zweiten Elektrode (124) angeordnet ist;
**dadurch gekennzeichnet, dass** sie ferner umfasst:
- eine erste Schicht (148), die auf der Stromsammelplatte (144) befestigt ist, wobei die erste Schicht eine Polyurethanmatrix umfasst, in der Ladungen eines leitenden Materials eingeschlossen sind;
- eine zweite Schicht (138), die auf der Gasdiffusionsschicht (134) befestigt ist, wobei die zweite Schicht eine Polyurethanmatrix umfasst, in der Ladungen eines leitenden Materials eingeschlossen sind, wobei die zweite Schicht mit der ersten Schicht in Kontakt ist.

2. Brennstoffzelle (1) nach Anspruch 1, ferner umfassend:
- eine weitere metallische Stromsammelplatte (142);
- eine weitere Gasdiffusionsschicht (132), die zwischen der weiteren Stromsammelplatte und der ersten Elektrode (122) angeordnet ist;
- eine dritte Schicht (146), die auf der weiteren Stromsammelplatte (142) befestigt ist, wobei die dritte Schicht eine Polyurethanmatrix umfasst, in der Ladungen eines leitenden Materials eingeschlossen sind;
- eine vierte Schicht (136), die auf der weiteren Gasdiffusionsschicht (132) befestigt ist, wobei die vierte Schicht eine Polyurethanmatrix umfasst, in der Ladungen eines leitenden Materials eingeschlossen sind, wobei die vierte Schicht mit der dritten Schicht in Kontakt ist.

3. Brennstoffzelle (1) nach Anspruch 1 oder 2, bei der die Polyurethanmatrix der ersten und zweiten Schichten durch Verwendung eines Aushärters vom Typ Diisocyanat erhalten wird.

4. Brennstoffzelle nach Anspruch 3, bei der der Aushärter in der Gruppe ausgewählt wird, umfassend Hexylendiisocyanat, Toluylendiisocyanat und Diphenylmethandiisocyanat.

5. Brennstoffzelle nach einem der vorhergehenden Ansprüche, bei der die leitenden Ladungen, die in die erste und zweite Schicht eingeschlossen sind, Kohlenstoffpartikel umfassen.

6. Brennstoffzelle nach Anspruch 5, bei der die Kohlenstoffpartikel Ruß sind, der eine Granulometrie zwischen 200 und 500 nm gemäß einer Kalibrierung durch Filterspritze aufweist.

7. Brennstoffzelle nach einem der vorhergehenden Ansprüche, bei der die Oberflächen der ersten und zweiten Schichten, die sich in Kontakt befinden, eine Rauigkeit unter 1 Mikrometer aufweisen.

8. Brennstoffzelle nach einem der vorhergehenden Ansprüche, bei der die Gasdiffusionsschicht (134) von Graphitfasern gebildet ist.

9. Brennstoffzelle nach einem der vorhergehenden Ansprüche, bei der die erste Schicht (148) eine Wechselfolge von Nuten (156) und vorspringenden Teilen (158) umfasst, und bei der die zweite Schicht (138) durchgehende Ausnehmungen (139) gegenüber den Nuten (156) umfasst.

10. Verfahren zur Herstellung einer Brennstoffzelle, umfassend eine Protonenaustauschmembran (120), eine erste Elektrode (122) und eine zweite Elektrode (124), die beiderseits der Protonenaustauschmembran angeordnet sind, eine metallische Stromsammelplatte (144) und eine Gasdiffusionsplatte (134), die zwischen der Stromsammelplatte und der zweiten Elektrode (124) angeordnet ist, wobei das Verfahren die folgenden Schritte umfasst:
- Bildung einer ersten Schicht (148) mit einer Polyurethanmatrix, die Ladungen eines leitenden Materials einschließt, auf der Stromsammelplatte (144);
- Bildung einer zweiten Schicht (138) mit einer Polyurethanmatrix, die Ladungen eines leitenden Materials einschließt, auf der Gasdiffusionsschicht (134);
- Herstellung eines Kontakts zwischen den gebildeten ersten und zweiten Schichten.

11. Herstellungsverfahren nach Anspruch 10, bei dem die Schritte der Bildung der ersten und zweiten Schichten die Vernetzung einer Polyurethanmatrix mit Hilfe eines Aushärters vom Typ Diisocyanat einschließen.

## Claims

1. Fuel cell stack (1), comprising:
- a proton exchange membrane (120);
- a first electrode (122) and a second electrode (124) fixed on either side of the proton exchange membrane;
- a current collecting metal plate (144); and
- a gas diffusion layer (134) interposed between the current collecting plate and the second electrode (124),
**characterized in that** it furthermore comprises:
- a first layer (148) fixed on the current collecting plate (144), the first layer comprising a polyurethane matrix containing conductive fillers; and
- a second layer (138) fixed to the gas diffusion layer (134), the second layer comprising a polyurethane matrix containing conductive fillers, the second layer making contact with the first layer.

2. Fuel cell stack (1) according to Claim 1, furthermore comprising:
- another current collecting metal plate (142);
- another gas diffusion layer (132) interposed between the other current collecting plate and the first electrode (122);
- a third layer (146) fixed on the other current collecting plate (142), the third layer comprising a polyurethane matrix containing conductive fillers; and
- a fourth layer (136) fixed on the other gas diffusion layer (132), the fourth layer comprising a polyurethane matrix containing conductive fillers, the fourth layer making contact with the third layer.

3. Fuel cell stack (1) according to either of Claims 1 and 2, in which the polyurethane matrix of the first and second layers is obtained using a diisocyanate curing agent.

4. Fuel cell stack according to Claim 3, in which said curing agent is chosen from the group comprising hexylene diisocyanate, toluene diisocyanate and diphenylmethane diisocyanate.

5. Fuel cell stack according to any one of the preceding claims, in which the conductive fillers contained in the first and second layers comprise carbon particles.

6. Fuel cell stack according to Claim 5, in which the carbon particles are particles of carbon black having a particle size between 200 and 500 nm as measured by syringe filter.

7. Fuel cell stack according to any one of the preceding claims, in which the surfaces that make contact of the first and second layers have a roughness of less than 1 micron.

8. Fuel cell stack according to any one of the preceding claims, in which the gas diffusion layer (134) is formed from graphite fibers.

9. Fuel cell stack according to any one of the preceding claims, in which the first layer (148) comprises an alternation of grooves (156) and protruding parts (158) and in which the second layer (138) comprises through-windows (139) facing the grooves (156).

10. Process for manufacturing a fuel cell stack comprising a proton exchange membrane (120), a first electrode (122) and a second electrode (124) which are fixed on either side of the proton exchange membrane, a current collecting metal plate (144), and a gas diffusion layer (134) interposed between the current collecting plate and the second electrode (124), the process comprising steps of:
- forming a first layer (148) with a polyurethane matrix containing conductive fillers on the current collecting plate (144);
- forming a second layer (138) with a polyurethane matrix containing conductive fillers on the gas diffusion layer (134); and
- bringing the first and second layers formed into contact.

11. Manufacturing process according to Claim 10, in which the steps of forming the first and second layers include crosslinking a polyurethane matrix using a diisocyanate curing agent.
